# EUROPEAN PATENT SPECIFICATION

(11) **EP 4 627 463 B1**
(45) Date of publication and mention of the grant of the patent: **30.09.2026**
(21) Application number: 23810006.9
(22) Date of filing: 17.11.2023
(51) Int. Cl.: G06F 21/53, G06F 9/455, G06F 21/60, H04L 9/08

(54) **EXTENDING SECURE GUEST METADATA TO BIND THE SECURE GUEST TO AN HSM**
ERWEITERUNG SICHERER GASTMETADATEN ZUR BINDUNG DES SICHEREN GASTS AN EIN HSM
EXTENSION DE MÉTADONNÉES D'INVITÉ SÉCURISÉES POUR LIER L'INVITÉ SÉCURISÉ À UN HSM

(30) Priority: 29.11.2022 GB 202217870; 25.01.2023 US 202318159263
(43) Date of publication of application: 08.10.2025
(73) Proprietor: International Business Machines Corporation, Armonk, New York 10504 (US)
(72) Inventor: BUENDGEN, Reinhard, 71032 Boeblingen (DE); BRADBURY, Jonathan, Poughkeepsie, NY 12601 (US)
(74) Representative: IBM Deutschland GmbH
(86) International application number: PCT/EP2023/082297
(87) International publication number: WO 2024/115150

(56) References cited:
- US-A1- 2016 149 877
- US-A1- 2020 089 916
- US-A1- 2020 285 746
- US-A1- 2021 234 681

## Description

### BACKGROUND

### Field of the Invention

The invention relates generally to a computer-implemented security method in a trusted computing environment, and more specifically, to a computer-implemented method for implementing a three-factor authorization to control using a key protected by a hardware security module and generated by a secure guest in a trusted computing environment. The invention relates further to a security system for implementing a three-factor authorization to control using a key protected by a hardware security module and generated by a secure guest in a trusted computing environment, and a computer program product.

### Related Art

The security of data and communication channels still continues to have one of the highest priorities for the management of corporate IT (information technology). This is not only necessary due to government regulations (e.g. GDPR, EU General Data Protection Regulation), but also due to a loss of credibility among companies in not being able to reliably protect customer data at all times - and in order to avoiding loss of sales and profits - in the event of compromised customer data records. It turns out that data protection and the provision of secure computing platforms is not just a software issue, it also involves hardware modules. This may not yet be a natural environment for mass-market CPU-chips used in microcontrollers, personal computers, mobile phones or home automation devices. However, for highly trusted enterprise-class computing environments, such as those used in the financial, insurance, or government industries, it is essential to be able to demonstrate that, from a technological perspective, data breaches have a very high probability of being prevented. This may require some additional high-tech components and supporting processes. However, the associated success in terms of data security pays off for the additional effort.

These thoughts are also applicable to trusted computing environments in which cryptographic keys used by virtual machines (also denoted as guests) or software containers running on/in hypervisors can practically not be accessed by the hypervisor or related software management and configuration programs. Nevertheless, also in such computing environments breaches of the fundamental security rules, such as an exposure of a secret key or usage of a secret key for a secure guest image through the hypervisor, continue to be possible. This may also be possible in environments in which hardware security modules (HSMs) have been in use for quite some time.

There are already some disclosures that fit in the context of the computer-implemented method implementing three-factor authentication to have control using an HSM protected key generated by secure guests in a trusted computing environment. Document US 2020 /0076607 A1 describes how a secret is securely maintained on a virtual computer system by configuring a specialized virtual machine to manage and maintain the sequent on behalf of an application. When the application requests access to the secret, a controlling domain, in combination with the specialized virtual machine, validates that the application is authorized to make the request and that the application has not been compromised prior to making the request. US 2020/0285749 A1 discloses a method, computer program product, and a system where a secure interface control configures a hardware security module for exclusive use by a secure guest. US 202/0089916 A1 discloses aspects of the present disclosure relate to binding a hardware security module to a software component. A secret can be cryptographically linked to the software component. US 2016/0149877 A1 discloses a new approach is proposed that contemplates systems and methods to support security management for a plurality of web services hosted in a cloud at a data center to offload their crypto operations to one or more hardware security modules (HSMs) deployed in the cloud. US 2021/0234681 A1 discloses at least one secure object of a security module is bound to a secure guest. A trusted component determines whether metadata of the secure guest includes a confidential binding attribute for the security module.

Known problems in such environments can be identified in the context of allowing to perform a master key roll or a local key re-encryption while the software component using the encrypted keys continue to be executed. Furthermore, the master key used to encrypt local keys may be stored in multiple redundant HSMs which are accessible by the software component. Technologies such as openCryptoki or CCA (Common Cryptographic Architecture) cannot yet elegantly meet this requirement.

However, none of these approaches can reliably protect completely against unauthorized exposures of secrets or a use of a secret for the wrong, non-authorized guest image. Hence, there is a need to address these open problems.

### SUMMARY OF THE INVENTION

According to one aspect of the present invention, a computer-implemented method for implementing a three-factor authorization to control using a key protected by a hardware security module and generated by a secure guest in a trusted computing environment may be provided. The method may comprise triggering, by a hypervisor, a start of a secure guest by passing control regarding an image of the secure guest and respective metadata to a trusted firmware, where the secure guest is designed to access a hardware security module. Upon a successful integrity check of the secure guest metadata by the trusted firmware, the method may also comprise starting the secure guest using the hypervisor, and blocking any sensitive request from the secure guest to the hardware security module.

Furthermore, the method may comprise submitting, by the secure guest, a request comprising a request structure including a third authorization secret and a characterization of a requested hardware security module to the trusted firmware, and binding, by the trusted firmware, each hardware security module protected key generated in the requested hardware security module upon a request by the secure guest to the third authorization secret.

According to another aspect of the present invention, a security system for implementing a three-factor authorization to control using a key protected by a hardware security module and generated by a secure guest in a trusted computing environment may be provided. The system may comprise one or more processors and a memory operationally coupled to the one or more processors, wherein the memory stores program portions which, when executed, enable the one or more processors to trigger, by a hypervisor, a start of a secure guest by passing control regarding an image of the secure guest and respective metadata to a trusted firmware, where the secure guest is designed to access a hardware security module (HSM).

The processor may further be enabled to start the secure guest using the hypervisor, and to block any sensitive request from the secure guest to the hardware after a successful integrity check of the secure guest metadata by the trusted firmware.

Additionally, the processor may be enabled to submit, by the secure guest, a request comprising a request structure including a third authorization secret and a characterization of a requested hardware security module to the trusted firmware, and to bind, by the trusted firmware, each hardware security module protected key generated in the requested hardware security module upon a request by the secure guest to the third authorization secret.

The proposed computer-implemented method for implementing a three-factor authorization may offer multiple advantages, technical effects, contributions and/or improvements:

The proposed concept can increase the security of confidential computing environments. In particular, stealing access credentials for one secure guest to be used by another secure guest as well as a related binding to a specific hardware security module, i.e., the use of a secret for a secure image may be made impossible.

In particular, the deficiencies of traditional solutions can be overcome. Traditionally, the usage of HSM-protected keys is protected by two factors: (1) the access to the key object or key handle and (2) the possession of an HSM (i.e., having exclusive access to an HSM). For virtual servers (aka guests) running in virtualized environment the second factor is a weak one as the access to an HSM can be configured by a non-trustworthy hypervisor admin and thus granted to a non-trustworthy virtual server.

To resolve this issue a third factor is introduced that is a secret stored by the trusted FW for a secure guest and used to be associated with all HSM-protected keys such that these keys can only be used by a secure guest for which the trusted FW stores that third authorization factor secret.

It should also be noted that the term authorization factor was used here instead of the more common term 'authentication factor'. The relation between an authorization factor and an authentication factor is as follows: in order for a subject to get the authorization factor to use a key object or handle the subject must have provide the associated authentication factor: I.e. provide the login credentials (factor 1) to an environment with exclusive access to an HSM (factor 2) and provide the third authorization secret to the trusted firmware controlling the environment (factor).

This may be handled via an extension of the metadata used for a secure guest. In particular, at the start of the secure guest by the hypervisor, a third authorization factor secret - in particular an encrypted form - may be loaded to the trusted firmware and decrypted here for further use together with the secure guest.

In certain use cases, it may not be appropriate that the third authorization factor secret is included in the initial metadata of a secure guest. In particular, if the secure guest image may be a generic software, no user specific secrets like the third authorization factor secret may be included in the initial metadata of the generic secure guest. Hence, the third authorization factor secret must be provided in a secure manner to the trusted firmware (FW) by a running secure guest after the secure guest code has rendered the generic secure guest into a guest belonging to a specific user.

Hereby, security requires that only the trusted FW can learn the plaintext value of like the third authorization factor secret and the third authorization factor secret will only be accepted by a specific secure guest.

With this, it may become impossible to intercept a communication between the secure guest and the trusted firmware by an untrusted component in order to steal the access credentials as well as the HSM binding. Hence, the used secret of the credentials can no longer be used for a "wrong guest image".

In the following, additional embodiments of the inventive concept - applicable for the method as well as for the system - will be described.

According to an advantageous embodiment, the method may also comprise unblocking sensitive requests to the requested hardware security module from the secure guest that may only operate on at least one hardware security module protected key which is bound to the third authorization secret. Hence, initially, the secure guest, as well as any other guest, are not able to trigger any crypto/sensitive requests to the HSM. However, once the secure guest may have been started and having requested the binding to a specific HSM - i.e., by extending metadata with a third factor authorization secret for an HSM - only the secure guest that initiated the binding may potentially interact with the named HSM. No other guest on the hypervisor and not the hypervisor itself can misuse credentials stolen in order to interact with the HSM instead of the only allowed secure guest.

According to a preferred embodiment, the method may comprise instructing, by the trusted firmware, the hardware security module of the computing system to bind each key to be generated to the third authorization secret. This may lay the base for an enablement to accept keys bound to the third authorization secret. I.e., a request of the secure guest may be routed through the trusted FW to the HSM. Thereby, the trusted FW may intercept the related request and forward the request in modified form to the HSM.

According to another preferred embodiment of the method, the request structure may be integrity protected and partially encrypted such that only the trusted firmware - in particular of the targeted system - may be enabled to decrypt the encrypted part of the request structure and subsequently verify the integrity of the related request.

I.e., the trusted FW and the target system may relate to each other in the sense that the target system may hold (store) the private key with the help of which the integrity may be confirmed and thus the encrypted part may be decrypted. As a consequence, the trusted FW may be enabled to reject a request using a request structure of which the integrity cannot be verified.

Furthermore, simple checksum protocols are not sufficient for integrity checking. The integrity check should be cryptographically secure; hence, hash value comparisons, digital signatures or message authentication codes (MACs) are suitable measures to enable the integrity checking.

According to a further advantageous embodiment of the method, the encrypted part of the request structure may comprise the third authorization secret. Hence, a simple interception of the communication route from the secure guest to the trusted firmware may not be enough to compromise the system.

According to a useful embodiment of the method, the metadata of the secure guest maintained by the trusted firmware may comprise (a secret from which to derive) an extension secret, and the trusted FW rejects every request that does not contain the extension secret. Thereby, it should be understood that the metadata are forwarded to the trusted firmware during or at the start of the secure guest. Secrets and keys are encrypted outside of the system and may only be decrypted using the trusted firmware. These decrypted secrets and keys may then be stored in the trusted firmware or in a storage exclusively controlled by the trusted firmware for later usage.

This feature may lay one of the foundations for the trusted firmware being able to reject a request using a request structure which does not comprise the extension secret in addition to the third authorization secret in its encrypted part and thus enforce that only the creator of the original meta data may generate a valid request to add a third factor authorization secret to the meta as long as the creator does not disclose the extension secret to a third party.

According to another useful embodiment of the method, the secure guest may submit the request to the trusted firmware via a direct firmware call. Such a call to the trusted firmware may ensure that no data transmitted can be intercepted and/or observed by the hypervisor or any management software. Furthermore, the trusted firmware may associate a request with the component of the system (here a specific secure guest) that submitted the request.

As not all requests to the hardware security module must be considered sensitive some limited access to the hardware security module may be allowed before a third authorization factor secret is associated with the hardware security module.

All cryptographic requests targeted for the hardware security module may also be submitted as direct firmware calls to the trusted firmware, presenting a pass-through attachment of the hardware security module to the secure guest such that the hypervisor cannot observe the data exchanged between the secure guest and the hardware security module.

According to a further embodiment of the method, each request to the hardware security module that comprises a hardware security module protected key may be classified as sensitive. Hence, the mechanisms described above regarding access to a specific hardware security module may be applied during the secure guest startup.

As not all requests to the hardware security module must be considered sensitive some limited access to the hardware security module may be allowed before a third authorization factor secret is associated with the hardware security module.

The same positive behavior may be a consequence of another useful embodiment of the method, where each request that retums a result containing a hardware security module protected key is sensitive.

Also for this feature one may state: As not all requests to the hardware security module must be considered sensitive some limited access to the hardware security module may be allowed before a third authorization factor secret is associated with the hardware security module.

According to a further developed embodiment of the method, the request structure may comprise a measurement of a secure guest and wherein the trusted FW may reject the request if the measurement does not match the measurement of the image of the secure guest that submits the request structure. This measurement may comprise hash values, digital signatures or MACs (message authentication codes). This may represent an auto-blocking mechanism.

According to another advanced embodiment of the method, the request structure may comprise a measurement of a portion of the metadata of the secure guest, and wherein the trusted firmware may reject the request if the measurement of metadata does not match the measurement of the metadata of the secure guest that submits the request structure. The addition of the measurement - also here hash values, digital signatures or MACs may be used - may also here represent an auto-blocking mechanism.

According to an advantageous embodiment, the method may also comprise protecting, by the trusted firmware, the third authorization factor secret against access from any guest and the hypervisor. Additionally, also any other access requests from any other untrusted component of the system may be rejected in the same manner. In particular, the secure guest that submits the request structure comprising a third authorization secret in the encrypted part of the request structure must not be able to access the third authorization factor form the trusted firmware.

According to an enhanced embodiment, the method may comprise instructing, by the trusted firmware, the hardware security module to no longer accept keys bound to the third authorization secret if access to the hardware security module has been provided to an untrusted component. In a sense, this may be seen as a self-locking mechanism to protect against unauthorized access for any further attempt.

Furthermore, embodiments may take the form of a related computer program product, accessible from a computer-usable or computer-readable medium providing program code for use, by, or in connection, with a computer or any instruction execution system. For the purpose of this description, a computer-usable or computer-readable medium may be any apparatus that may contain means for storing, communicating, propagating or transporting the program for use, by, or in connection, with the instruction execution system, apparatus, or device.

### BRIEF DESCRIPTION OF THE DRAWINGS

It should be noted that embodiments of the invention are described with reference to different subject-matters. In particular, some embodiments are described with reference to method type claims, whereas other embodiments are described with reference to apparatus type claims. However, a person skilled in the art will gather from the above and the following description that, unless otherwise notified, in addition to any combination of features belonging to one type of subject - matter, also any combination between features relating to different subject - matters, in particular, between features of the method type claims, and features of the apparatus type claims, is considered as to be disclosed within this document.

The aspects defined above and further aspects of the present invention are apparent from the examples of embodiments to be described hereinafter and are explained with reference to the examples of embodiments, to which the invention is not limited.

Preferred embodiments of the invention will be described, by way of example only, and with reference to the following drawings:
Fig. 1 shows a block diagram of an embodiment of the inventive computer-implemented method for implementing a three-factor authorization to control using a key protected by a hardware security module and generated by a secure guest in a trusted computing environment.
Fig. 2 shows a block diagram of a security threat even when using a trusted firmware and hardware security module is used.
Fig. 3 shows a further block diagram how a two-factor authorization works in trusted computing environments.
Fig. 4 shows a block diagram of a three-factor authorization for a trusted computing environment.
Fig. 5 shows a flowchart of additional and optional steps for the flow diagram, according to Fig. 1.
Fig. 6 shows a flowchart of the proposed security method under another aspect and with more details.
Fig. 7 shows components of the inventive concept with relationships to each other.
Fig. 8 shows a block diagram of an embodiment of the inventive security system for implementing a three-factor authorization to control using a key protected by a hardware security module and generated by a secure guest in a trusted computing environment.
Fig. 9 shows an embodiment of a computing system comprising the security system according to Fig. 8.

### DETAILED DESCRIPTION

In the context of this description, the following technical conventions, terms and/or expressions may be used:

The term 'three-factor authorization' may denote a procedure under which access to a computer system resource may only be granted if three conditions are met independently from each other. Widely known is the two-factor authorization for online banking, where a user enters a username and passphrase and receives an additional security code via a smartphone, e.g., to be entered via browser. This concept may be enhanced by a third independent component to make access to system resources significantly more secure.

The term 'key protected by a hardware security module' may denote that an encryption of the protected key may only be possible using a master key from a hardware security module. Thereby, the access to the hardware security module may only be possible to avoid trusted firmware.

The term 'secure guest' may denote a virtual machine or a software container comprising executable program code in a secure computing environment that is protected by a trusted execution environment such that no non-trusted component of a computer system can observe any state (memory or registers) of the running secure guest. Typical non-trusted components are software hypervisors, hardware management consoles and other guests.

The term 'trusted computing environment' may denote a computing environment in which a hypervisor on any system management software having a user interface component may access or intercept a virtual machine and in particular used encryption or decryption keys.

The term 'hypervisor' may denote a well-defined type of computer software or firmware that creates and run virtual machines or software containers. Hence, a plurality of virtual machines/software container may be executed in parallel without any risk of cross references. An error in of the virtual machines may not cause any harm to another virtual machine. Each virtual machine may own a defined address room.

The term 'image of the secure guest' may denote one or more files comprising an executable software component to be executed as a secure guest using a hypervisor.

The term 'metadata' may denote - in the classical sense, information about data - here, in particular, data required to start a virtual machine. Such information may be used by the the trusted firmware in order to start a virtual machine, like, e.g., may contain integrity measures of an image of a secure guest or keys needed to decrypt the image of a secure guest. These metadata may, e.g., comprise resources required, interfaces required, performance required and - in some cases - also which security measures are appropriate. The extension of the metadata and the proposed concept may be the additional secret key used by the trusted firmware and handed over by, e.g., the hypervisor starts before the virtual machine (or software container) is started or by the running secure guest.

The term 'trusted firmware' (trusted FW or TFW) may denote a component deeply embedded into the hardware of the computing (mainframe) system which may not be accessed by any other user-controlled software. The trusted firmware may have predefined and highly secured application programming interfaces in order to protect - in a broad sense - the functioning of the trusted firmware. The trusted FW should more be seen as a deeply integrated component of the computer system instead of a service component. Communication channels to/from the trusted firmware are typically cryptographically protected.

In the context of confidential computing, the trusted firmware may implement the trusted execution environment (TEE). An example of trusted computing environment is the Ultravisor of Secure Execution for Linux feature of IBM Z systems.

The term 'integrity check' may denote to ensure that the component - in particular, request structure - may be consistent in itself. For this, typically hash value comparisons, digital signatures or message authentication codes (MACs) may be used.

The term 'blocking any sensitive request' may denote the denial to forward or execute any request requiring a special protection/encryption of exchange information.

The term 'request structure' may denote a data structure describing details used as part of a request for a binding between a secure guest and a specific, selected hardware security module. This request structure may be integrity protected and may be partially encrypted where the encrypted part may also comprise the third authorization secret. It may be decrypted using a key that is only accessible to the trusted firmware and stored in a dedicated storage area of the trusted firmware for further usage.

The term 'third authorization secret' may denote the third component for a three-factor authentication protocol. In the context of this document, first factor may be credentials to get access to a secure guest (e.g., user-ID and password) and the second factor may be an access path to a specific hardware security module.

The term 'integrity protected' may denote that a data structure may have an inherent consistency structure and has not been tampered with since its creation, i.e., integrity which can be checked, e.g., using hash values, digital signatures or MACs.

The term 'hardware security module' (HSM) may denote a hardware element being connected to or integrated into a computer system, e.g., a server system, e.g., here, a manufacturing-side server computer. The HSM is designed to be tamper proof, and to protect a secret, i.e., a software key against unauthorized access, even against physical penetration and/or unscheduled physical de-plugging. The HSM may be closely linked to a CPU or may be operated independently of the CPU. In other words, an HSM is a physical computing device that safeguards and manages one or more digital keys for strong authentication and provides crypto-processing. These modules traditionally may come in the form of a plug-in card or an external device that may be attached directly to a computer or network server.

The term 'extension secret' may denote a secret that when it is part of or is derived from a secret in the metadata may ensure that only the creator of the metadata can create request structures to modify (e.g. extend) the metadata.

The term 'binding a hardware security module protected key to a secret' may mean an integrity protected indication being part of a hardware security protected key such this key can considered valid by the hardware security module if the trusted firmware and possibly the hardware security module has access to the secret.

In the following, a detailed description of the figures will be given. All instructions in the figures are schematic. Firstly, a flow chart of an embodiment of the inventive computer-implemented method for implementing a three-factor authorization to control using a key protected by a hardware security module and generated by a secure guest in a trusted computing environment is given. Afterwards, further embodiments, as well as embodiments of the security system for implementing a three-factor authorization to control using a key protected by a hardware security module and generated by a secure guest in a trusted computing environment will be described.

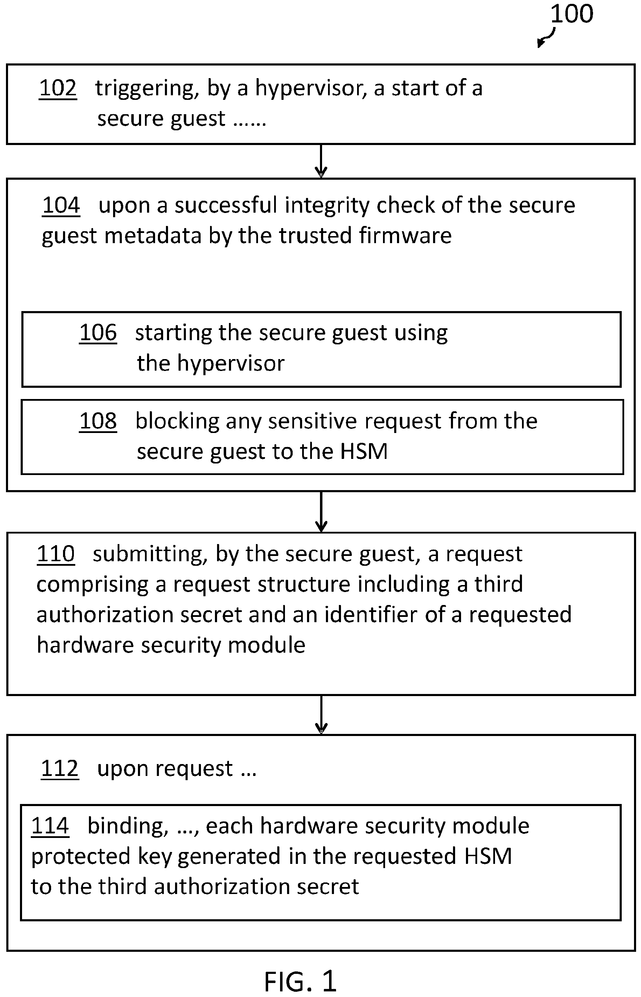

Fig. 1 shows a block diagram of a preferred embodiment of the computer-implemented method 100 for implementing a three-factor authorization to control using a key protected by a hardware security module and generated by a secure guest in a trusted computing environment. The secure guest may, e.g., comprise a virtual machine or a software container - or simply container - comprising executables of the code.

The method 100 comprises triggering, 102, by a hypervisor, a start of a secure guest by passing control regarding an image of the secure guest and respective metadata to a trusted firmware, where the secure guest is designed to access a hardware security module.

The method 100 comprises also, upon a successful integrity check 104 of the secure guest metadata by the trusted firmware, starting, 106, the secure guest using the hypervisor, and blocking, 108, any sensitive request from the secure guest to the hardware security module. It shall also be mentioned that at a later stage of a lifetime of the secure guest the blocking 108 may be released again once the final secure association between the secure guest and the selected hardware security module has been established.

The method 100 also comprises submitting, 110, by the secure guest, a request comprising a request structure including a third authorization secret - i.e., third factor - and characterization of a requested hardware security module to the trusted firmware, as well as an advantageous exclusively binding, 114, by the trusted firmware, each hardware security module protected key generated in the requested hardware security module upon a request 112 by the secure guest to the third authorization secret. After this binding 114, the virtual secure guest should now be enabled to submit sensitive crypto request to the requested HSM; i.e., such requests are no longer blocked.

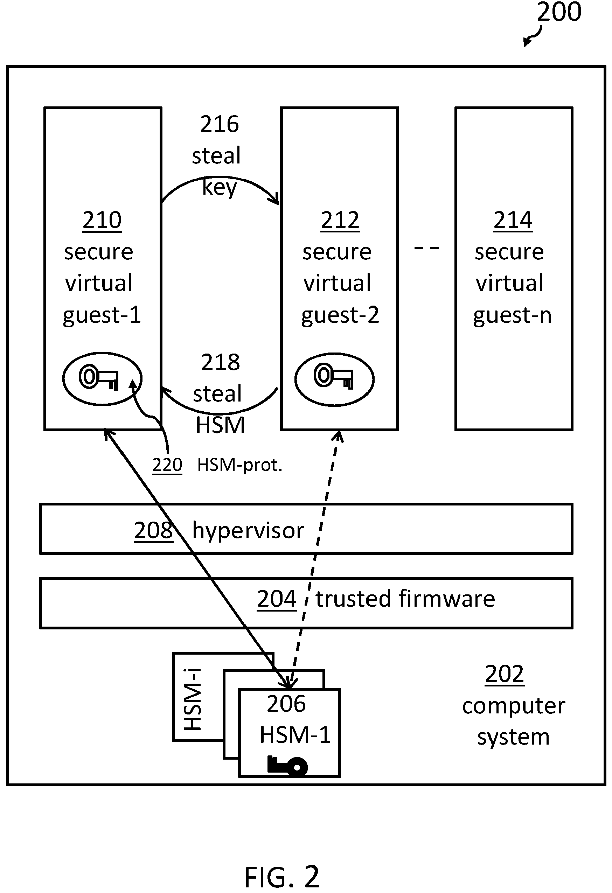

Fig. 2 shows a block diagram 200 of a security threat even when using trusted firmware and/or the security module. All components are preferably executed as part of the computer system 202. Very closely related to the computer system 202 as such is the trusted firmware 204 which cannot be changed by a user of the computer system and which is installed and enabled during the production of the computer system 202.

Additionally, one or more hardware security modules HSM-1 to HSM-i 206 can be components of the computer system 202. Here, e.g., an HSM key to be used to protect HSM protected keys may be stored and can only be accessed using clearly defined and strict access procedures.

A next layer of the stacked architecture is represented by the hypervisor 208 which enables to execute guests 210, 212, 214, e.g., virtual machines or containers comprising executables of the code. Secure guest 210 can exemplarily maintain a security key 212 which may be protected by the master key managed by the HSM 206. However, in a situation where the secret key 220 may be exposed so that the secure guest-2 212 may have access to it, i.e., by stealing, 216, that key, and where also an HSM binding to a specific HSM-1 206 is stolen, 218, by reconfiguring the HSM access from secure guest 210 to secure guest 212, the secret key 220 can be misused by the secure guest-2 212, i.e., for the wrong guest image.

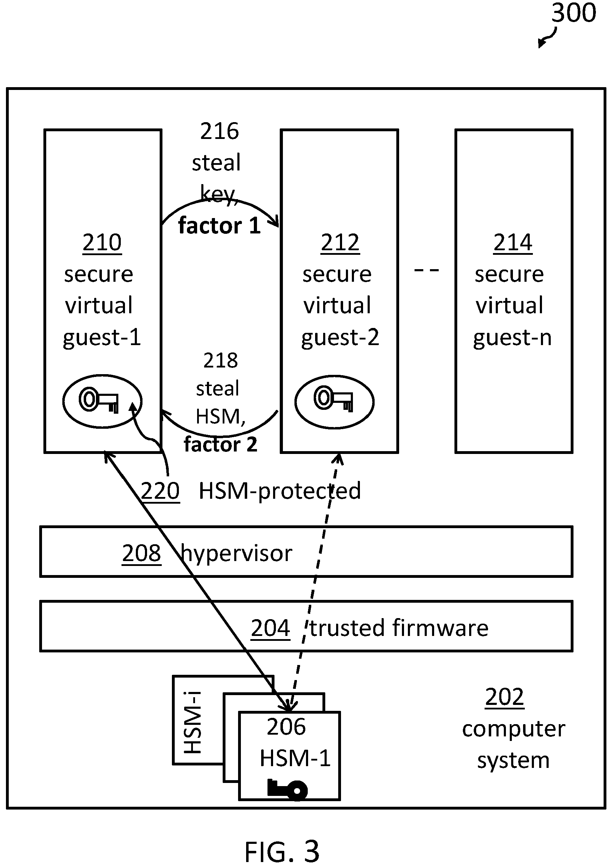

Fig. 3 shows a further block diagram 300 how a two-factor authentication works in trusted computing environments. The main components are here the same as in Fig. 2. It only illustrates in which way the first security factor and the second security factor have been stolen by the secure guest-2 212 in order to wrongly access HSM-1 206.

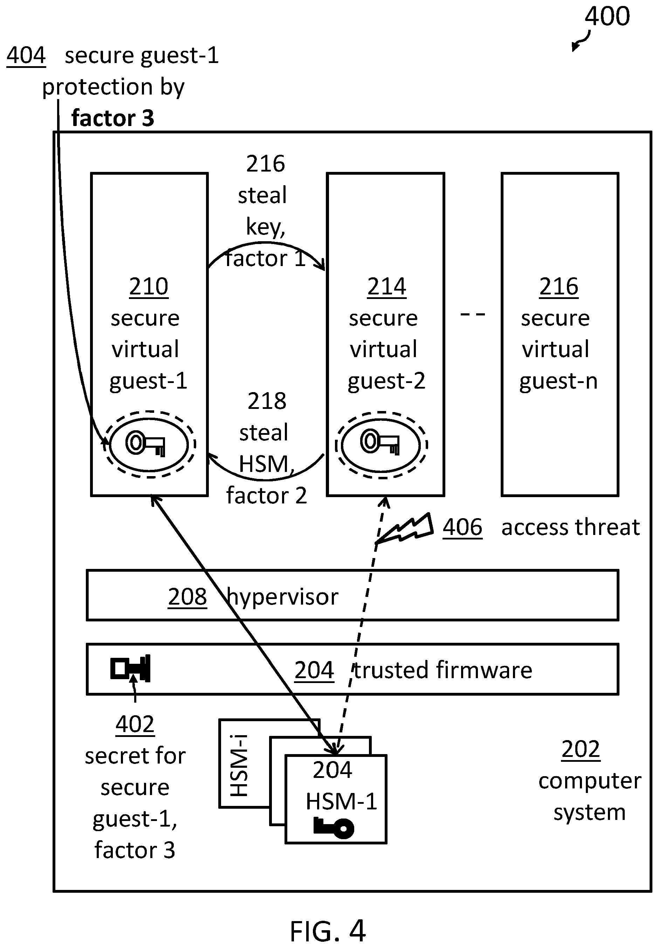

Fig. 4 shows a block diagram 400 of a three-factor authentication for a trusted computing environment. With the third authentication factor, the above-described threat can be avoided successfully. Now, the key inside secure guest one 210 is now protected by another protection shield, i.e., the third authorization factor 404, so that secure guest-1 is protected by this third factor. In order to access this protection mechanism, the secret 402 is loaded to the trusted firmware 204 for secure guest-1 at the time of initializing secure guest-1 210 as additional metadata of the secure guest-1 210.

Such additional protection can be enabled for each secure guest (secure guest-2, ..., secure guest-n), as shown with the additional dashed line surrounding the security key of secure guest-2 214. This way, the excess threat 406 from stolen keys and HSM bindings belonging to secure guest-1 210 by secure guest-2 214 can be stopped altogether. This stealing, 216, of the key representing authentication factor 1 and the stealing, 218, of the HSM binding representing authentication factor 2 is now no longer sufficient to establish wrongly a binding of secure guest-2 214.

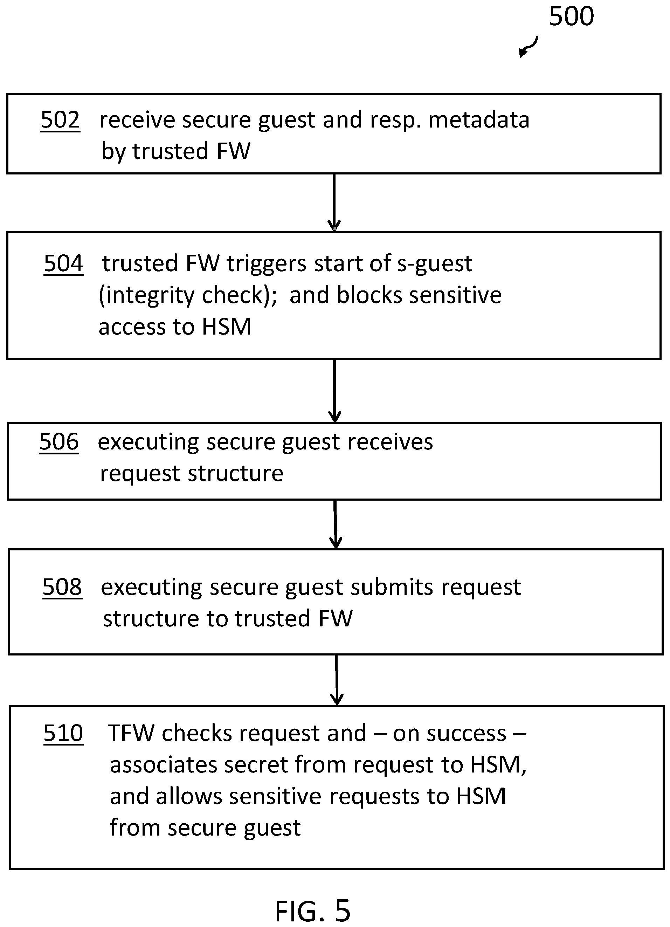

Fig. 5 shows a flowchart 500 of additional and optional steps for the flow diagram according to Fig. 1. These additional activities can be executed together with or as an extension of the flowchart described in the context of Fig. 1. They also do not need to be executed in the sequence shown. They may be executed before, in paralleled or after some of the steps, according to Fig. 1.

These additional steps comprise receiving, 502, an image of the secure guest and respective metadata by the hypervisor, the trusted firmware, respectively. Then, the trusted firmware can trigger, 504, a start of the secure guest, provided an integrity check, as described above, has been performed. At this early stage of the execution of the secure guest, any sensitive access of the secure guest to an HSM is blocked. In a further step, the executing secure guest (s-guest) receives, 506, a request structure, e.g., from an operator or user of the secure guest or a respective program. Then the executing secure guest can submit, 508, the request structure to the trusted firmware. Next, the trusted firmware (TFW) integrity-checks, 510, the request and, on a successful check, the respective HSM and the secret as part of the request are associated to each other. From this time on words, sensitive requests (e.g., crypto-requests) from the respective secure guest to the corresponding HSM are now allowed and no longer blocked. Hence, the protocol has been executed completely.

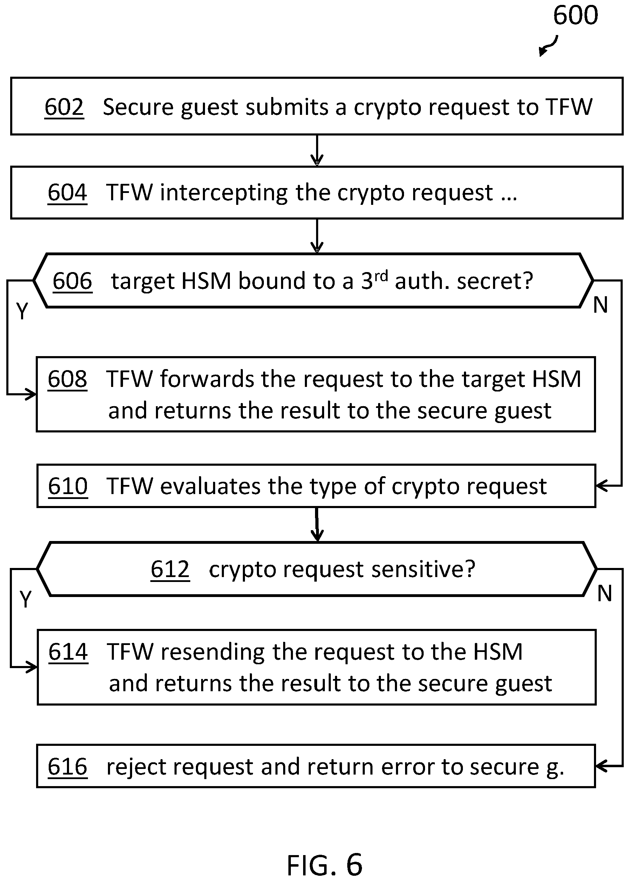

Fig. 6 shows a flowchart of the proposed security method under another aspect and with more details, in particular, the blocking and evaluating of a crypto request is detailed. The process 600 starts with the secure guest submitting, 602, a crypto request to the trusted FW. After receiving the crypto request, the trusted FW intercepts, 604, the crypto request for the hardware security module (i.e., target HSM) from the secure guest. Then, a determination 606 is performed whether the target HSM is bound to (or associated with) a 3^{rd} authorization secret. If that is the case - case "Y" - the trusted FW forwards, 608, the request to the HSM and returns the result to the secure guest.

If that is not the case - case "N" - i.e., if is the target HSM is not bound to (or associated with) a 3^{rd} authorization secret, the rusted FW evaluates, 610, the type of crypto request.

If it is determined, 612, - case "Y" - that the type of crypto request is sensitive, then the trusted FW resends, 614, the request to the HSM - optionally after possible modifications based on the 3^{rd} authorization secret - and returns the result to the secure guest - also optionally after possible modifications based on the 3^{rd} authorization secret. Otherwise - case "N" - the trusted FW rejects, 616, the request and returns an error to the calling guest. Hence, no unauthorized secure guest can successfully perform a crypto request, if the intercepting trusted FW determines that no association exists between the requesting secure guest and the requested HSM.

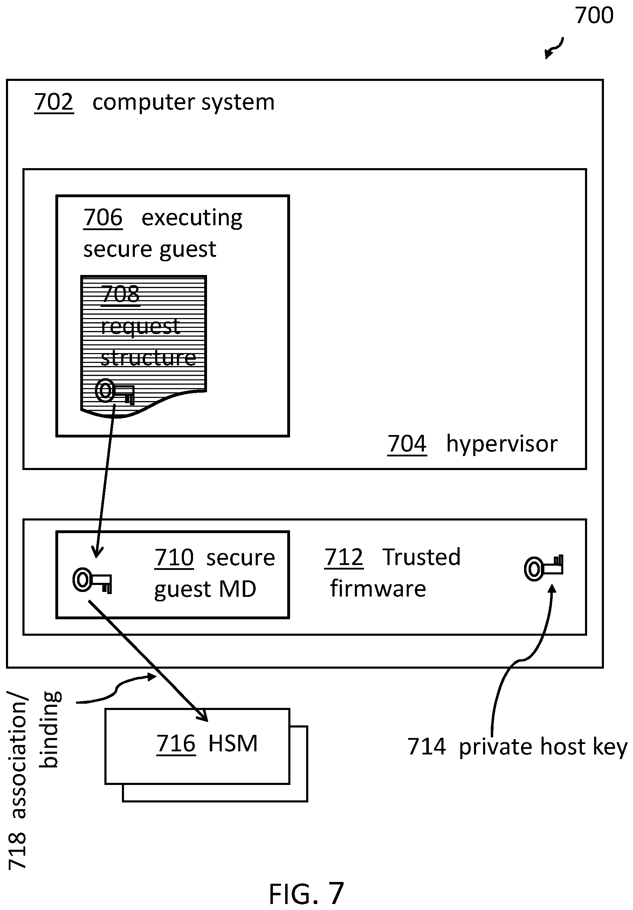

Fig. 7 shows components 700 of the inventive concept with relationships to each other. Everything happens in the context of the computer system 702, e.g., a mainframe computing system. The hypervisor 704 enables the execution of a (running) secure guest 706. The secure guest can be seen as a cloud computing resource for a remote user. The (remote) user may use a tool in the trusted environment of the owner of the resource to generate the request structure 708.

Furthermore, the computing system 702 can also comprise a trusted firmware (FW) 712 - and, as part of it - secure trusted metadata comprising secrets for the running secure guest 706. These metadata can be loaded during the start of the secure guest 706.

The request structure 708 is typically encrypted with the help of a public host key (not shown). The counterpart of the public host key is the private host key 714 maintained by the trusted FW. The encrypted request structure 708 comprises a secret key (shown as part of the request structure 708) which can be added to the secure guest metadata 710. The secret key which has become a part of the secure guest metadata (MD) 710 builds - so to speak - the gatekeeper between secure guest and a specific hardware security module (HSM) 716. The arrow between the secret key as part of the secure guest MD 710 and the HSM 716 represents the binding 718 of the executing secure guest 706 and the selected HSM 716, which may be one HSM part of the plurality of HSMs.

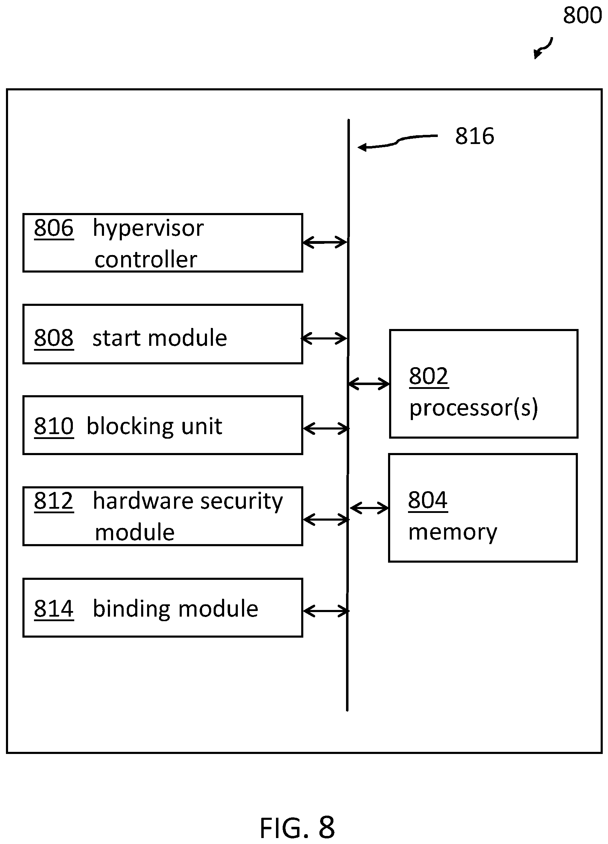

Fig. 8 shows a block diagram of an embodiment of the inventive security system 800 for implementing a three-factor authorization to control using a key protected by a hardware security module and generated by a secure guest in a trusted computing environment. The system 800 comprises one or more processors 802 and a memory 804 operationally coupled to the one or more processors 802, wherein the memory 804 stores program portions which, when executed, enable the one or more processors to trigger, by a hypervisor or hypervisor controller 806, a start of a secure guest by passing control regarding an image of the secure guest and respective metadata to a trusted firmware, wherein the secure guest is designed to access a hardware security module.

The processor 802 is, upon a successful integrity check of the secure guest metadata by the trusted firmware, also enabled to start - e.g., by a start module 808 - the secure guest using the hypervisor, and blocking - in particular by a blocking unit 810 - any sensitive request from the secure guest to the hardware security module 812.

Additionally, the processor 802 is also enabled to submit - in particular by a submission unit 812 which may be triggered by the secure guest - a request comprising a request structure including a third authorization secret and an identifier of a requested hardware security module to the trusted firmware, and to bind - in particular by a binding module 814 which can be triggered by the trusted firmware - each hardware security module protected key generated in the requested hardware security module upon a request by the secure guest to the third authorization secret.

It shall also be mentioned that all functional units, modules and functional blocks - in particular the one or more processors 802, the memory 804, the hypervisor controller 806, the start module 808, on the blocking unit 810, the hardware security module 812 and a binding module 814 - may be communicatively coupled to each other for signal or message exchange in a selected 1:1 manner. Alternatively the functional units, modules and functional blocks can be linked to a system internal bus system 816 for a selective signal or message exchange.

Various aspects of the present disclosure are described by narrative text, flowcharts, block diagrams of computer systems and/or block diagrams of the machine logic included in computer program product (CPP) embodiments. With respect to any flowcharts, depending upon the technology involved, the operations can be performed in a different order than what is shown in a given flowchart. For example, again depending upon the technology involved, two operations shown in successive flowchart blocks may be performed in reverse order, as a single integrated step, concurrently, or in a manner at least partially overlapping in time.

A computer program product embodiment (CPP embodiment or CPP) is a term used in the present disclosure to describe any set of one, or more, storage media (also called mediums) collectively included in a set of one, or more, storage devices that collectively include machine readable code corresponding to instructions and/or data for performing computer operations specified in a given CPP claim. A storage device is any tangible device that can retain and store instructions for use by a computer processor. Without limitation, the computer readable storage medium may be an electronic storage medium, a magnetic storage medium, an optical storage medium, an electromagnetic storage medium, a semiconductor storage medium, a mechanical storage medium, or any suitable combination of the foregoing. Some known types of storage devices that include these mediums include diskette, hard disk, random access memory (RAM), read-only memory (ROM), erasable programmable read - only memory (EPROM or Flash memory), static random access memory (SRAM), compact disc read-only memory (CD - ROM), digital versatile disk (DVD), memory stick, floppy disk, mechanically encoded device (such as punch cards or pits/lands formed in a major surface of a disc) or any suitable combination of the foregoing. A computer readable storage medium, as that term is used in the present disclosure, is not to be construed as storage in the form of transitory signals per se, such as radio waves or other freely propagating electromagnetic waves, electromagnetic waves propagating through a waveguide, light pulses passing through a fiber optic cable, electrical signals communicated through a wire, and/or other transmission media. As will be understood by those of skill in the art, data is typically moved at some occasional points in time during normal operations of a storage device, such as during access, de-fragmentation or garbage collection, but this does not render the storage device as transitory because the data is not transitory while it is stored.

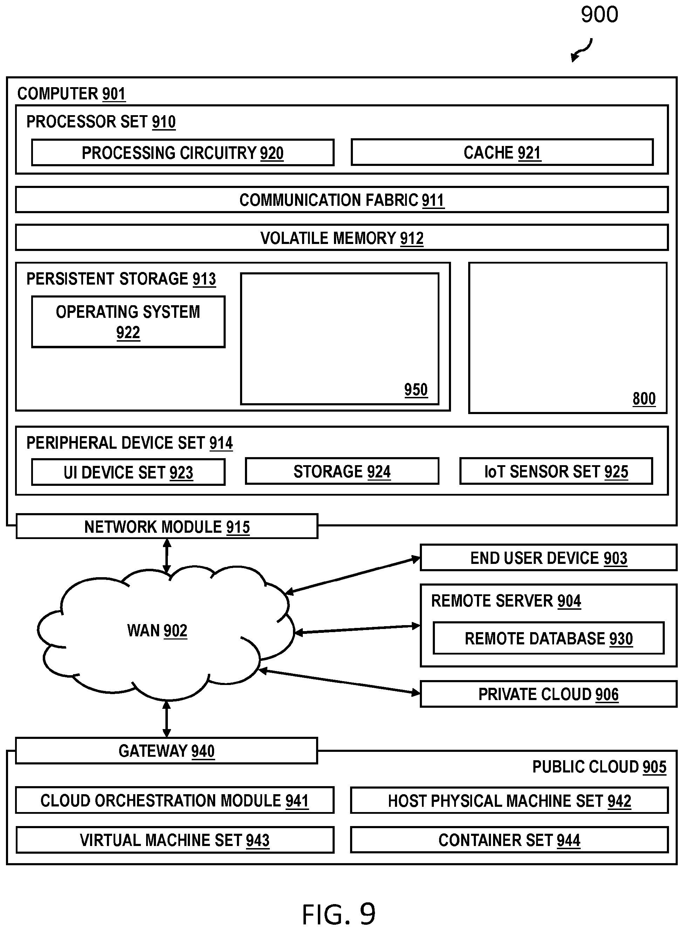

Fig. 9 shows a computing environment 900 comprising an example of an environment for the execution of at least some of the computer code involved in performing the inventive methods, such as the computer-implemented method 100, 950 for implementing a three-factor authorization to control using a key protected by a hardware security module and generated by a secure guest in a trusted computing environment.

In addition to block 950, computing environment 900 includes, for example, computer 901, wide area network (WAN) 902, end user device (EUD) 903, remote server 904, public cloud 905, and private cloud 906. In this embodiment, computer 901 includes processor set 910 (including processing circuitry 920 and cache 921), communication fabric 911, volatile memory 912, persistent storage 913 (including operating system 922 and block 950, as identified above), peripheral device set 914 (including user interface (UI), device set 923, storage 924, and Internet of Things (IoT) sensor set 925), and network module 915. Remote server 904 includes remote database 930. Public cloud 905 includes gateway 940, cloud orchestration module 941, host physical machine set 942, virtual machine set 943, and container set 944.

COMPUTER 901 may take the form of a desktop computer, laptop computer, tablet computer, smart phone, smart watch or other wearable computer, mainframe computer, quantum computer or any other form of computer or mobile device now known or to be developed in the future that is capable of running a program, accessing a network or querying a database, such as remote database 930. As is well understood in the art of computer technology, and depending upon the technology, performance of a computer - implemented method may be distributed among multiple computers and/or between multiple locations. On the other hand, in this presentation of computing environment 900, detailed discussion is focused on a single computer, specifically computer 901, to keep the presentation as simple as possible. Computer 901 may be located in a cloud, even though it is not shown in a cloud in Figure 9. On the other hand, computer 901 is not required to be in a cloud except to any extent as may be affirmatively indicated.

PROCESSOR SET 910 includes one, or more, computer processors of any type now known or to be developed in the future. Processing circuitry 920 may be distributed over multiple packages, for example, multiple, coordinated integrated circuit chips. Processing circuitry 920 may implement multiple processor threads and/or multiple processor cores. Cache 921 is memory that is located in the processor chip package(s) and is typically used for data or code that should be available for rapid access by the threads or cores running on processor set 910. Cache memories are typically organized into multiple levels depending upon relative proximity to the processing circuitry. Alternatively, some, or all, of the cache for the processor set may be located "off chip." In some computing environments, processor set 910 may be designed for working with qubits and performing quantum computing.

Computer readable program instructions are typically loaded onto computer 901 to cause a series of operational steps to be performed by processor set 910 of computer 901 and thereby effect a computer - implemented method, such that the instructions thus executed will instantiate the methods specified in flowcharts and/or narrative descriptions of computer - implemented methods included in this document (collectively referred to as "the inventive methods"). These computer readable program instructions are stored in various types of computer readable storage media, such as cache 921 and the other storage media discussed below. The program instructions, and associated data, are accessed by processor set 910 to control and direct performance of the inventive methods. In computing environment 900, at least some of the instructions for performing the inventive methods may be stored in block 950 in persistent storage 913.

COMMUNICATION FABRIC 911 is the signal conduction paths that allow the various components of computer 901 to communicate with each other. Typically, this fabric is made of switches and electrically conductive paths, such as the switches and electrically conductive paths that make up busses, bridges, physical input / output ports and the like. Other types of signal communication paths may be used, such as fiber optic communication paths and/or wireless communication paths.

VOLATILE MEMORY 912 is any type of volatile memory now known or to be developed in the future. Examples include dynamic type random access memory (RAM) or static type RAM. Typically, the volatile memory is characterized by random access, but this is not required unless affirmatively indicated. In computer 901, the volatile memory 912 is located in a single package and is internal to computer 901, but, alternatively or additionally, the volatile memory may be distributed over multiple packages and/or located externally with respect to computer 901.

PERSISTENT STORAGE 913 is any form of non-volatile storage for computers that is now known or to be developed in the future. The non-volatility of this storage means that the stored data is maintained regardless of whether power is being supplied to computer 901 and /or directly to persistent storage 913. Persistent storage 913 may be a read only memory (ROM), but typically at least a portion of the persistent storage allows writing of data, deletion of data and re - writing of data. Some familiar forms of persistent storage include magnetic disks and solid state storage devices. Operating system 922 may take several forms, such as various known proprietary operating systems or open source Portable Operating System Interface type operating systems that employ a kernel. The code included in block 950 typically includes at least some of the computer code involved in performing the inventive methods.

PERIPHERAL DEVICE SET 914 includes the set of peripheral devices of computer 901. Data communication connections between the peripheral devices and the other components of computer 901 may be implemented in various ways, such as Bluetooth connections, Near-Field Communication (NFC) connections, connections made by cables (such as universal serial bus (USB) type cables), insertion type connections (e.g., secure digital (SD) card), connections made though local area communication networks and even connections made through wide area networks such as the internet. In various embodiments, UI device set 923 may include components such as a display screen, speaker, microphone, wearable device (such as goggles and smart watches), keyboard, mouse, printer, touchpad, game controllers, and haptic devices. Storage 924 is external storage, such as an external hard drive, or insertable storage, such as an SD card. Storage 924 may be persistent and/or volatile. In some embodiments, storage 924 may take the form of a quantum computing storage device for storing data in the form of qubits. In embodiments where computer 901 is required to have a large amount of storage (for example, where computer 901 locally stores and manages a large database) then this storage may be provided by peripheral storage devices designed for storing very large amounts of data, such as a storage area network (SAN) that is shared by multiple, geographically distributed computers. IoT sensor set 925 is made up of sensors that can be used in Internet of Things applications. For example, one sensor may be a thermometer and another sensor may be a motion detector.

NETWORK MODULE 915 is the collection of computer software, hardware, and firmware that allows computer 901 to communicate with other computers through WAN 902. Network module 915 may include hardware, such as modems or Wi-Fi signal transceivers, software for packetizing and/or de-packetizing data for communication network transmission, and/or web browser software for communicating data over the internet. In some embodiments, network control functions and network forwarding functions of network module 915 are performed on the same physical hardware device. In other embodiment (e.g., embodiments that utilize software - defined networking (SDN)), the control functions and the forwarding functions of network module 915 are performed on physically separate devices, such that the control functions manage several different network hardware devices. Computer readable program instructions for performing the inventive methods can typically be downloaded to computer 901 from an external computer or external storage device through a network adapter card or network interface included in network module 915.

WAN 902 is any wide area network (for example, the internet) capable of communicating computer data over non - local distances by any technology for communicating computer data, now known or to be developed in the future. In some embodiments, the WAN may be replaced and/or supplemented by local area networks (LANs) designed to communicate data between devices located in a local area, such as a Wi-Fi network. The WAN and/or LANs typically include computer hardware such as copper transmission cables, optical transmission fibers, wireless transmission, routers, firewalls, switches, gateway computers and edge servers.

END USER DEVICE (EUD) 903 is any computer system that is used and controlled by an end user (for example, a customer of an enterprise that operates computer 901), and may take any of the forms discussed above in connection with computer 901. EUD 903 typically receives helpful and useful data from the operations of computer 901. For example, in a hypothetical case where computer 901 is designed to provide a recommendation to an end user, this recommendation would typically be communicated from network module 915 of computer 901 through WAN 902 to EUD 903. In this way, EUD 903 can display, or otherwise present, the recommendation to an end user. In some embodiments, EUD 903 may be a client device, such as thin client, heavy client, mainframe computer, desktop computer and so on.

REMOTE SERVER 904 is any computer system that serves at least some data and/or functionality to computer 901. Remote server 904 may be controlled and used by the same entity that operates computer 901. Remote server 904 represents the machine(s) that collect and store helpful and useful data for use by other computers, such as computer 901. For example, in a hypothetical case where computer 901 is designed and programmed to provide a recommendation based on historical data, then this historical data may be provided to computer 901 from remote database 930 of remote server 904.

PUBLIC CLOUD 905 is any computer system available for use by multiple entities that provides on - demand availability of computer system resources and/or other computer capabilities, especially data storage (cloud storage) and computing power, without direct active management by the user. Cloud computing typically leverages sharing of resources to achieve coherence and economies of scale. The direct and active management of the computing resources of public cloud 905 is performed by the computer hardware and/or software of cloud orchestration module 941. The computing resources provided by public cloud 905 are typically implemented by virtual computing environments that run on various computers making up the computers of host physical machine set 942, which is the universe of physical computers in and/or available to public cloud 905. The virtual computing environments (VCEs) typically take the form of virtual machines from virtual machine set 943 and/or containers from container set 944. It is understood that these VCEs may be stored as images and may be transferred among and between the various physical machine hosts, either as images or after instantiation of the VCE. Cloud orchestration module 941 manages the transfer and storage of images, deploys new instantiations of VCEs and manages active instantiations of VCE deployments. Gateway 940 is the collection of computer software, hardware, and firmware that allows public cloud 905 to communicate through WAN 902.

Some further explanation of virtualized computing environments (VCEs) will now be provided. VCEs can be stored as "images." A new active instance of the VCE can be instantiated from the image. Two familiar types of VCEs are virtual machines and containers. A container is a VCE that uses operating - system - level virtualization. This refers to an operating system feature in which the kernel allows the existence of multiple isolated user - space instances, called containers. These isolated user - space instances typically behave as real computers from the point of view of programs running in them. A computer program running on an ordinary operating system can utilize all resources of that computer, such as connected devices, files and folders, network shares, CPU power, and quantifiable hardware capabilities. However, programs running inside a container can only use the contents of the container and devices assigned to the container, a feature which is known as containerization.

PRIVATE CLOUD 906 is similar to public cloud 905, except that the computing resources are only available for use by a single enterprise. While private cloud 906 is depicted as being in communication with WAN 902, in other embodiments a private cloud may be disconnected from the internet entirely and only accessible through a local/private network. A hybrid cloud is a composition of multiple clouds of different types (for example, private, community or public cloud types), often respectively implemented by different vendors. Each of the multiple clouds remains a separate and discrete entity, but the larger hybrid cloud architecture is bound together by standardized or proprietary technology that enables orchestration, management, and/or data/application portability between the multiple constituent clouds. In this embodiment, public cloud 905 and private cloud 806 are both part of a larger hybrid cloud.

It should also be mentioned that the security system 800 for implementing a three-factor authorization to control using a key protected by a hardware security module and generated by a secure guest in a trusted computing environment can be an operational subsystem of the computer 801 and may be attached to a computer-intemal bus system.

The terminology used herein is for the purpose of describing particular embodiments only and is not intended to limit the invention. As used herein, the singular forms "a", "an" and "the" are intended to include the plural forms as well, unless the context clearly indicates otherwise. It will further be understood that the terms comprises and/or comprising, when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or steps plus function elements in the claims below are intended to include any structure, material, or act for performing the function in combination with other claimed elements, as specifically claimed. The description of the present invention has been presented for purposes of illustration and description, but is not intended to be exhaustive or limited to the invention in the form disclosed. Many modifications and variations will be apparent to those of ordinary skills in the art without departing from the scope of the invention. The embodiments are chosen and described in order to best explain the principles of the invention and the practical application, and to enable others of ordinary skills in the art to understand the invention for various embodiments with various modifications, as are suited to the particular use contemplated.

## Claims

1. A computer-implemented method for implementing a three-factor authorization to control using a key protected by a hardware security module and generated by a secure guest in a trusted computing environment, said method comprising
- triggering, by a hypervisor, a start of a secure guest by passing control regarding an image of said secure guest and respective metadata to a trusted firmware, wherein said secure guest is designed to access a hardware security module,
- upon a successful integrity check of said secure guest metadata by said trusted firmware,
- starting said secure guest using said hypervisor, and
- blocking any sensitive request from said secure guest to said hardware security module,
- submitting, by said secure guest, a request comprising a request structure including a third authorization secret and a characterization of a requested hardware security module to said trusted firmware,
- binding, by said trusted firmware, each hardware security module protected key generated in said requested hardware security module upon a request by said secure guest to said third authorization secret.

2. The method according to claim 1, also comprising
- unblocking sensitive requests to said requested hardware security module from said secure guest that only operates on at least one hardware security module protected key which is bound to said third authorization secret.

3. The method according to claim 1 or 2, also comprising
- instructing, by said trusted firmware, said hardware security module to bind each key to be generated to said third authorization secret.

4. The method according to one of claims 1 to 3, wherein said request structure is integrity protected and partially encrypted such that only said trusted firmware is enabled to decrypt said encrypted part of said request structure and subsequently verify said integrity of said related request.

5. The method according to claim 4, where said encrypted part of said request structure comprises said third authorization secret.

6. The method according to one of claims 1 to 5, wherein
- said metadata of said secure guest maintained by said trusted firmware comprises an extension secret, and said trusted firmware rejects every request that does not contain said extension secret.

7. The method according to one of claims 1 to 6, wherein said secure guest submits said request
to said trusted firmware via a direct firmware call, wherein said request structure and all sensitive cryptography requests target to a hardware security module.

8. The method according to one of claims 1 to 7, wherein each request to said hardware security module that comprises a hardware security module protected key is sensitive.

9. The method according to one of claims 1 to 8, wherein each request that returns a result containing a hardware security module protected key is sensitive.

10. The method according to one of claims 1 to 9, wherein said request structure comprises a measurement of a secure guest and wherein said trusted firmware rejects said request if said measurement not match said measurement of said image of said secure guest that submits said request structure.

11. The method according to one of claims 1 to 10, wherein said request structure comprise a measurement of a portion of said metadata of said secure guest, and wherein said trusted firmware rejects said request if said measurement of metadata does not match said measurement of said metadata of said secure guest that submits said request structure.

12. The method according to one of claims 1 to 11, also comprising
- protecting, by said trusted firmware, said third authorization secret against access from any guest and said hypervisor.

13. The method according to one of claims 1 to 12, wherein upon providing access to said hardware security module to an untrusted component
- instructing, by said trusted firmware, said hardware security module to no longer accept keys bound to said third authorization secret.

14. A security system for implementing a three-factor authorization to control using a key protected by a hardware security module and generated by a secure guest in a trusted computing environment, said system comprising
- one or more processors and a memory operationally coupled to said one or more processors, wherein said memory stores program portions which, when executed, enable said one or more processors to perform a method according to any of claims 1 to 13.

15. A computer program product for implementing a three-factor authorization to control using a key protected by a hardware security module and generated by a secure guest in a trusted computing environment, said computer program product comprising a computer readable storage medium having program instructions embodied therewith, said program instructions being executable by one or more computing systems or controllers to cause said one or more computing systems or controllers to perform a method according to any of claims 1 to 13.

## Patentansprüche

1. Computerrealisiertes Verfahren zum Realisieren einer Drei-Faktor-Berechtigungsprüfung, um eine Verwendung eines Schlüssels zu steuern, der durch ein Hardware-Sicherheitsmodul geschützt und durch einen sicheren Gast in einer vertrauenswürdigen Datenverarbeitungsumgebung erzeugt wird, wobei das Verfahren aufweist
- Auslösen eines Starts eines sicheren Gasts durch einen Hypervisor, indem eine Steuerung in Bezug auf ein Image des sicheren Gasts und entsprechende Metadaten an eine vertrauenswürdige Firmware übergeben wird, wobei der sichere Gast ausgelegt ist, um auf ein Hardware-Sicherheitsmodul zuzugreifen,
- nach einer erfolgreichen Integritätsprüfung der Metadaten des sicheren Gasts durch die vertrauenswürdige Firmware
- Starten des sicheren Gasts durch Verwenden des Hypervisors, und
- Blockieren einer etwaigen sensiblen Anforderung von dem sicheren Gast an das Hardware-Sicherheitsmodul,
- Übergeben einer Anforderung, die eine Anforderungsstruktur mit einem dritten geheimen Berechtigungsprüfungselement und einer Charakterisierung eines angeforderten Hardware-Sicherheitsmoduls aufweist, durch den sicheren Gast an die vertrauenswürdige Firmware,
- Binden eines jeden durch ein Hardware-Sicherheitsmodul geschützten Schlüssels, der in dem angeforderten Hardware-Sicherheitsmodul erzeugt wird, nach einer Anforderung durch den sicheren Gast an das dritte geheime Berechtigungsprüfungselement durch die vertrauenswürdige Firmware.

2. Verfahren nach Anspruch 1, außerdem aufweisend
- Aufheben der Blockierung sensibler Anforderungen an das angeforderte Hardware-Sicherheitsmodul von dem sicheren Gast, der ausschließlich mindestens einen durch ein Hardware-Sicherheitsmodul geschützten Schlüssel verwendet, der an das dritte geheime Berechtigungsprüfungselement gebunden wird.

3. Verfahren nach Anspruch 1 oder 2, außerdem aufweisend
- Anweisen des Hardware-Sicherheitsmoduls durch die vertrauenswürdige Firmware, um jeden zu erzeugenden Schlüssel an das dritte geheime Berechtigungsprüfungselement zu binden.

4. Verfahren nach einem der Ansprüche 1 bis 3, wobei die Anforderungsstruktur einen Integritätsschutz aufweist und teilweise verschlüsselt wird, sodass nur die vertrauenswürdige Firmware in der Lage ist, den verschlüsselten Teil der Anforderungsstruktur zu entschlüsseln und daraufhin die Integrität der zugehörigen Anforderung zu überprüfen.

5. Verfahren nach Anspruch 4, wobei der verschlüsselte Teil der Anforderungsstruktur das dritte geheime Berechtigungsprüfungselement aufweist.

6. Verfahren nach einem der Ansprüche 1 bis 5, wobei
- die Metadaten des durch die vertrauenswürdige Firmware verwalteten sicheren Gasts ein geheimes Erweiterungselement aufweisen und die vertrauenswürdige Firmware jede Anforderung zurückweist, die das geheime Erweiterungselement nicht enthält.

7. Verfahren nach einem der Ansprüche 1 bis 6, wobei der sichere Gast die Anforderung über einen Firmware-Direktaufruf an die vertrauenswürdige Firmware übergibt, wobei die Anforderungsstruktur und alle sensiblen Verschlüsselungsanforderungen ein Hardware-Sicherheitsmodul zum Ziel haben.

8. Verfahren nach einem der Ansprüche 1 bis 7, wobei jede Anforderung an das Hardware-Sicherheitsmodul, die einen durch ein Hardware-Sicherheitsmodul geschützten Schlüssel aufweist, sensibel ist.

9. Verfahren nach einem der Ansprüche 1 bis 8, wobei jede Anforderung, die ein Ergebnis zurückgibt, das einen durch ein Hardware-Sicherheitsmodul geschützten Schlüssel enthält, sensibel ist.

10. Verfahren nach einem der Ansprüche 1 bis 9, wobei die Anforderungsstruktur einen Messwert eines sicheren Gasts aufweist und wobei die vertrauenswürdige Firmware die Anforderung zurückweist, wenn der Messwert nicht mit dem Messwert des Images des sicheren Gasts übereinstimmt, der die Anforderungsstruktur übergibt.

11. Verfahren nach einem der Ansprüche 1 bis 10, wobei die Anforderungsstruktur einen Messwert eines Teils der Metadaten des sicheren Gasts aufweist und wobei die vertrauenswürdige Firmware die Anforderungen zurückweist, wenn der Metadaten-Messwert nicht mit dem Messwert der Metadaten des sicheren Gasts übereinstimmt, der die Anforderungsstruktur übergibt.

12. Verfahren nach einem der Ansprüche 1 bis 11, außerdem aufweisend
- Schützen des dritten geheimen Berechtigungsprüfungselements durch die vertrauenswürdige Firmware gegen einen Zugriff von einem beliebigen Gast und dem Hypervisor.

13. Verfahren nach einem der Ansprüche 1 bis 12, wobei nach einem Bereitstellen eines Zugriffs auf das Hardware-Sicherheitsmodul an eine nicht vertrauenswürdige Komponente
- das Hardware-Sicherheitsmoduls durch die vertrauenswürdige Firmware angewiesen wird, an das dritte geheime Berechtigungsprüfungselement gebundene Schlüssel nicht mehr zu akzeptieren.

14. Sicherheitssystem zum Realisieren einer Drei-Faktor-Berechtigungsprüfung, um eine Verwendung eines Schlüssels zu steuern, der durch ein Hardware-Sicherheitsmodul geschützt und durch einen sicheren Gast in einer vertrauenswürdigen Datenverarbeitungsumgebung erzeugt wird, wobei das System aufweist
- einen oder mehrere Prozessoren und einen Arbeitsspeicher, der mit dem einen oder den mehreren Prozessoren wirkverbunden wird, wobei der Arbeitsspeicher Programmteile speichert, die bei Ausführung den einen oder die mehreren Prozessoren in die Lage versetzen, ein Verfahren nach einem beliebigen der Ansprüche 1 bis 13 durchzuführen.

15. Computerprogrammprodukt zum Realisieren einer Drei-Faktor-Berechtigungsprüfung, um eine Verwendung eines Schlüssels zu steuern, der durch ein Hardware-Sicherheitsmodul geschützt und durch einen sicheren Gast in einer vertrauenswürdigen Datenverarbeitungsumgebung erzeugt wird, wobei das Computerprogrammprodukt ein computerlesbares Speichermedium mit darauf enthaltenen Programmanweisungen aufweist, wobei die Programmanweisungen durch ein bzw. einen oder mehrere Datenverarbeitungssysteme oder Controller ausführbar sind, um das eine bzw. den einen oder die mehreren Datenverarbeitungssysteme oder Controller dazu zu veranlassen, ein Verfahren nach einem Ansprüche 1 bis 13 durchzuführen.

## Revendications

1. Procédé mis en œuvre par ordinateur pour mettre en œuvre une autorisation à trois facteurs pour contrôler l'utilisation d'une clé protégée par un module de sécurité matériel et générée par un invité sécurisé dans un environnement informatique de confiance, ledit procédé comprenant
- le déclenchement, par un hyperviseur, d'un démarrage d'un invité sécurisé en passant le contrôle concernant une image dudit invité sécurisé et des métadonnées respectives à un microprogramme de confiance, dans lequel ledit invité sécurisé est conçu pour accéder à un module de sécurité matériel,
- suite à une vérification d'intégrité réussie des métadonnées d'invité sécurisé par ledit microprogramme de confiance,
- le démarrage dudit invité sécurisé à l'aide dudit hyperviseur, et
- le blocage de toute requête sensible provenant dudit invité sécurisé et adressée audit module de sécurité matériel,
- la soumission, par ledit invité sécurisé, d'une requête comprenant une structure de requête incluant un troisième secret d'autorisation et une caractérisation d'un module de sécurité matériel demandé audit microprogramme de confiance,
- la liaison, par ledit microprogramme de confiance, de chaque clé protégée par module de sécurité matériel générée dans ledit module de sécurité matériel demandé lors d'une demande par ledit invité sécurisé audit troisième secret d'autorisation.

2. Procédé selon la revendication 1, comprenant également
- le déblocage des requêtes sensibles adressées audit module de sécurité matériel demandé depuis ledit invité sécurisé qui ne fonctionne que sur au moins une clé protégée par module de sécurité matériel liée audit troisième secret d'autorisation.

3. Procédé selon la revendication 1 ou 2, comprenant également
- l'instruction donnée, par ledit microprogramme de confiance, audit module de sécurité matériel de lier chaque clé à générer audit troisième secret d'autorisation.

4. Procédé selon une des revendications 1 à 3, dans lequel ladite structure de requête est protégée en termes d'intégrité et partiellement chiffrée de sorte que seul ledit microprogramme de confiance soit autorisé à déchiffrer ladite partie chiffrée de ladite structure de requête et à vérifier ultérieurement ladite intégrité de ladite requête associée.

5. Procédé selon la revendication 4, dans lequel ladite partie chiffrée de ladite structure de requête comprend ledit troisième secret d'autorisation.

6. Procédé selon une des revendications 1 à 5, dans lequel
- les métadonnées dudit invité sécurisé, gérées par ledit microprogramme de confiance, comprennent un secret d'extension et ledit microprogramme de confiance rejette toute requête qui ne contient pas ledit secret d'extension.

7. Procédé selon une des revendications 1 à 6, dans lequel ledit invité sécurisé soumet ladite requête audit microprogramme de confiance via un appel direct au microprogramme, dans lequel ladite structure de requête et toutes les requêtes de cryptographie sensibles sont destinées à un module de sécurité matériel.

8. Procédé selon une des revendications 1 à 7, dans lequel chaque requête adressée audit module de sécurité matériel qui comprend une clé protégée par module de sécurité matériel est sensible.

9. Procédé selon une des revendications 1 à 8, dans lequel chaque requête qui renvoie un résultat contenant une clé protégée par un module de sécurité matériel est sensible.

10. Procédé selon une des revendications 1 à 9, dans lequel ladite structure de requête comprend une mesure d'un invité sécurisé et dans lequel ledit microprogramme de confiance rejette ladite requête si ladite mesure ne correspond pas à ladite mesure de ladite image dudit invité sécurisé qui soumet ladite structure de requête.

11. Procédé selon une des revendications 1 à 10, dans lequel ladite structure de requête comprend une mesure d'une partie desdites métadonnées dudit invité sécurisé et dans lequel ledit microprogramme de confiance rejette ladite requête si ladite mesure desdites métadonnées ne correspond pas à ladite mesure desdites métadonnées dudit invité sécurisé qui soumet ladite structure de requête.

12. Procédé selon une des revendications 1 à 11, comprenant également
- la protection, par ledit microprogramme de confiance, dudit troisième secret d'autorisation contre l'accès de tout invité et dudit hyperviseur.

13. Procédé selon une des revendications 1 à 12, dans lequel, lors de la fourniture d'accès audit module de sécurité matériel à un composant non fiable
- l'instruction donnée, par ledit microprogramme de confiance, audit module de sécurité matériel de ne plus accepter des clés liées audit troisième secret d'autorisation.

14. Système de sécurité pour la mise en œuvre d'une autorisation à trois facteurs pour contrôler l'utilisation d'une clé protégée par un module de sécurité matériel et générée par un invité sécurisé dans un environnement informatique de confiance, ledit système comprenant
- un ou plusieurs processeurs et une mémoire couplée opérationnellement auxdits un ou plusieurs processeurs, dans lequel ladite mémoire mémorise des parties de programme qui, lorsqu'elles sont exécutées, permettent auxdits un ou plusieurs processeurs de mettre en œuvre un procédé selon une quelconque des revendications 1 à 13.

15. Produit de programme informatique pour la mise en œuvre d'une autorisation à trois facteurs pour contrôler l'utilisation d'une clé protégée par un module de sécurité matériel et générée par un invité sécurisé dans un environnement informatique de confiance, ledit produit de programme informatique comprenant un support de mémorisation lisible par ordinateur renfermant des instructions de programme, lesdites instructions de programme étant exécutables par un ou plusieurs systèmes informatiques ou contrôleurs pour amener lesdits un ou plusieurs systèmes informatiques ou contrôleurs à mettre en œuvre un procédé selon une quelconque des revendications 1 à 13.
